# EUROPEAN PATENT SPECIFICATION

(11) **EP 0 293 150 B1**
(45) Date of publication and mention of the grant of the patent: **12.07.1995**
(21) Application number: 88304641.9
(22) Date of filing: 23.05.1988
(51) Int. Cl.: G11B 17/04

(54) **Recording/reproducing apparatus for a disc cassette**
Aufnahme-/Wiedergabegerät für eine Plattenkassette
Appareil d'enregistrement/reproduction pour une cassette à disque

(30) Priority: 23.05.1987 JP 78054/87
(43) Date of publication of application: 30.11.1988
(73) Proprietor: SONY CORPORATION, Tokyo 141 (JP)
(72) Inventor: Suzuki, Masayuki, Shinagawa-ku Tokyo 141 (JP); Iwata, Hirokimi, Shinagawa-ku Tokyo 141 (JP)
(74) Representative: Purvis, William Michael Cameron

(56) References cited:
- EP-A- 0 156 569
- DE-A- 3 415 412
- DE-A- 3 542 343
- DE-A- 3 715 602
- PATENT ABSTRACTS OF JAPAN vol. 10, no. 116 (P-452)(2173) 30 April 1986, & JP-A-60 243855
- PATENT ABSTRACTS OF JAPAN vol. 11, no. 164 (P-580)(2611) 27 May 1987,& JP-A-61 296561
- PATENT ABSTRACTS OF JAPAN vol. 9, no. 2 (P-325)(1725) 08 January 1985,& JP-A-59 151367
- PATENT ABSTRACTS OF JAPAN vol. 8, no. 237 (P-310)(1674) 30 October 1984,& JP-A-59 112471

## Description

The invention relates to recording/reproducing apparatus for a disc cassette.

Such a disc cassette can accommodate a disc, such as an optical disc, an opto-magnetic disc or a magnetic disc. In such apparatus, after a disc cassette has been introduced into a predetermined position in the recording/reproducing apparatus, the disc cassette is shifted in the direction of its thickness so as to be positioned in and attached to a cassette insertion unit within the recording/reproducing apparatus by positioning pins engaging in positioning holes provided to the disc cassette.

In such recording/reproducing apparatus, if the disc is directly touched by the fingers of the operator during its insertion or removal from the apparatus, fingerprints may be deposited on the disc surface and may cause errors in recording and/or reproduction. In order to prevent the disc from being touched directly by fingers during handling and for preventing dust or dirt from becoming affixed to the disc during storage, the disc is loaded onto the apparatus while accommodated in a cassette casing so as to be used in this state for recording and/or reproduction. For this reason, recording/reproducing apparatus employing this king of disc cassette as the recording medium is provided with positioning means for positioning the disc cassette with respect to the recording/reproducing apparatus.

As such positioning means, one or more positioning holes may be provided in the cassette casing of the disc cassette and one or more positioning pins provided in the cassette insertion unit to which the disc cassette is removably mounted, the positioning pins being engaged in the positioning holes to determine the position of the disc cassette within the cassette insertion unit. To engage the positioning pins in the positioning holes, the disc cassette is inserted to a predetermined position into the inside of a cassette holder, after which the cassette holder is shifted in the direction of the thickness of the disc cassette, as disclosed in the Patent Specification US-A-3,845,502.

In recording/reproducing apparatus in which the disc cassette is positioned in the above described manner within the cassette insertion unit, it is necessary that, when the disc cassette has been inserted to the required position within the cassette holder, the positioning holes formed in the cassette casing be positioned substantially coaxially with the positioning pins provided in the cassette insertion unit, and be maintained at such position.

To this end, locking means are provided in the above kind of the recording/reproducing apparatus to lock the disc cassette when the disc cassette is inserted to a predetermined position within the cassette holder.

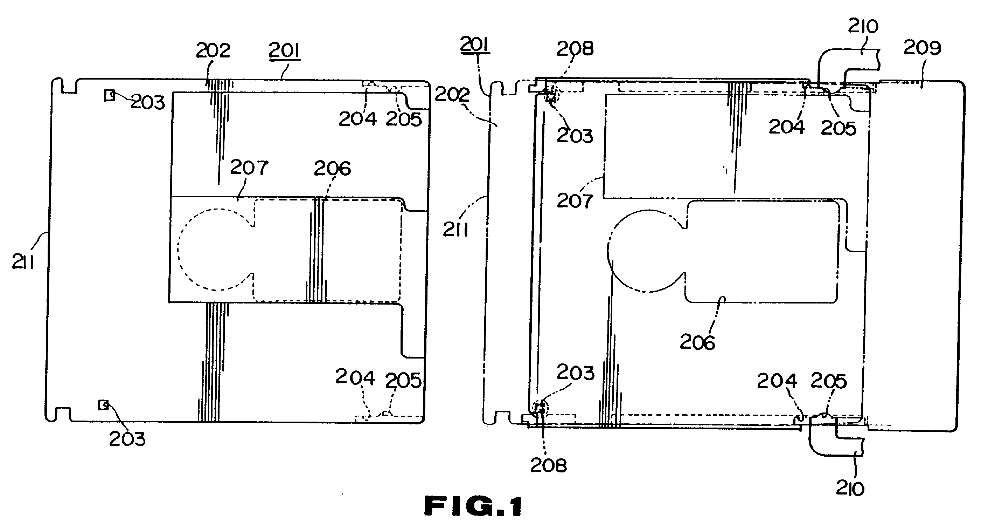

Figure 1 of the accompanying drawings shows locking means of previously proposed kind.

The locking means shown in Figure 1 is applied to an optical disc player. A disc cassette 201 applied to the optical disc player comprises a rectangular cassette casing 202 within which a disc-like optical disc is accommodated. At the corners of the rear of the cassette half 202 opposite to the side to be introduced into the optical disc player, positioning holes 203, 203 pass through the cassette casing 202 in the direction of its thickness. On both sides at the front of the cassette casing 202 introduced into the optical disc player, there are formed recesses 204, 204, at the mid portions of which engaging recesses 205, 205 are formed. A shutter 207 is provided in the cassette casing 202 for opening or closing an opening 206 confronted by a recording/reproducing pickup, not shown.

Two positioning pins 208, 208 are implanted on a chassis within the optical disc player, and a cassette holder 209 is provided above the chassis. The cassette holder 209 has an inner space within which the disc cassette 201 is accommodated substantially snugly and is movable between an eject position for insertion and removal of the optical disc cassette and a loading end position offset from the eject position towards the interior of the apparatus.

On both front sides of the cassette holder 209, a pair of lock levers 210, 210 are supported so that they can be turned horizontally.

When the disc cassette 201 is introduced into the cassette holder 209 to a prescribed inserting position shown by a double-dotted chain line in Figure 1, the forward ends of the lock levers 210, 210 are resiliently engaged with the engaging recesses 205, 205 formed in the recesses 204, 204 of the cassette casing 202. The disc cassette 201 is locked to the cassette holder 209 with a small space margin or allowance. When the cassette holder 209 is shifted from this locked position to the loading end position, the positioning pins 208, 208 are introduced into the positioning holes 203, 203 provided in the cassette casing 202 to position it in the cassette insertion unit.

However, the following problems are presented in the locking means for the optical disc player shown in Figure 1.

The above described locking means are so arranged and constructed that the disc cassette introduced into the cassette holder 209 is locked by the lock levers 210, 210 laterally engaging with the engaging recesses 205, 205 formed on the lateral sides of the disc cassette 201. Thus a space for the lock levers 210, 210 needs to be provided laterally of the cassette holder 209, with a corresponding increase in size of the optical disc player in a direction orthogonal to the thickness of the disc cassette 201.

On the other hand, the recording/reproducing apparatus with which the disc cassette is employed is generally standardized in its size and basic structure. With certain standards, it is occasionally not possible to provide the aforementioned space on the lateral sides of the cassette holder within the interior of the recording/reproducing apparatus, in which case the aforementioned locking means cannot be installed. Even if the locking means for the cassette holder were installed in the above described manner, the operation of the locking means is necessarily limited because of spatial constraints.

Also, in the above described locking means, the lock levers 210, 210 are engaged with the engaging recesses 205, 205 formed in the cassette casing 202 to lock the disc cassette 201 to the cassette holder 209. The engaging recesses 205, 205 are markedly spaced apart from the positioning holes 203, 203 in the cassette casing 202. Thus a considerable shift is caused in the relative disposition between the positioning holes 203, 203 and the positioning pins 208, 208 when the size of the cassette casing 202 is changed.

Since the cassette casing for this kind of disc cassette is usually formed of synthetic resin, the cassette casing size would be markedly changed if the disc cassette or the recording/reproducing apparatus were placed in an environment with a significantly different ambient temperature, so that considerable changes would be caused in the distance between the engaging recesses 205, 205 of the recesses 204, 204 and the positioning holes 203, 203.

When the disc cassette 201 is locked to the cassette holder 209 with such a size shift in the cassette casing 202, a shift may be caused in the relative disposition between the positioning holes 203, 203 and the positioning pins 208, 208 since the position of the positioning holes 203, 203 with respect to the cassette holder 209 is shifted considerably from its proper position, although substantially no shifting is caused in the position of the engaging recesses 205, 205 with respect to that of cassette holder 209.

Therefore, in this state, insertion of the positioning pins 208, 208 into the positioning holes 203, 203 cannot be carried out smoothly. Even if such insertion were made successfully, an unduly large force would be applied at the time of such insertion onto the inner surfaces of the positioning holes 203, 203 and the positioning pins 208, 208 in a direction orthogonal to their axial direction. As a result, the cassette casing 202 or the positioning pins 208, 208 would be deformed or the movement of the respective parts would be restricted thus giving rise to serious troubles. In case of excess shift, it might be impossible for the positioning pins 208, 208 to be introduced into the positioning holes 203, 203.

It might be contemplated to provide a suitable locking means to be engaged at the rear 211 of the cassette casing 202 i.e. close to the positioning holes 203, 203 for locking the disc cassette 201 introduced into the cassette holder 209. In such a case, the locking position of the disc cassette 201 introduced into the cassette holder 109 would be close to the positioning holes 203, 203 so that the positioning holes 203, 203 could be controlled to be substantially constant with respect to the cassette holder 209 under the locked condition despite changes in the size of the cassette casing 202.

However, such lock means is usually provided between the cassette holder 209 and a cassette inlet opening provided to the recording/reproducing apparatus. The result would be that the length of the recording/reproducing apparatus would be increased by a space reserved for the locking means with increased difficulties in the insertion and removal of the disc cassette.

Meanwhile, the cassette casing of the disc cassette is usually provided with holes or cut-outs for various purposes, such as finger guides to assist the insertion and removal of the disc cassette into and out of recording/reproducing apparatus, or as engagement means for the disc cassette in an automatic disc cassette supply device, these engagement means being occasionally provided in closer proximity to the aforementioned positioning holes.

Document DE-A-3415412 discloses a recording/reproducing apparatus for a disc cassette comprising
a disc cassette rotatably accommodating a disc-like recording medium and having positioning holes formed on both sides of the disc cassette and aligned with the thickness of the disc cassette,
a holder to hold the disc cassette and being vertically movable so as to cause the disc cassette selectively to take a first position in which the disc-like recording medium is attached to rotational disc drive means or a second position spaced above the first position,
means for shifting the holder between the first position and the second position,
positioning means to engage with the positioning holes in the disc cassette when the holder is in the first position thereby to position the disc cassette, and
locking means on a locking lever provided for rotation in the direction of the thickness of the disc cassette, the locking lever being rotated substantially simultaneously with termination of insertion of the disc cassette into the holder to cause locking projections on the locking lever to engage the disc cassette in the vicinity of the positioning holes of the disc cassette to lock the disc cassette relative to the holder.

According to the invention there is provided the recording/reproducing apparatus for a disc cassette is characterised in that
the locking lever comprises a strip which extends for the full width of the disc cassette and has side arms pivoted about pivots which extend parallel to the lateral extent of the disc cassette; and
the locking means includes a sliding member slidably mounted on the holder to slide upon insertion of the disc cassette into the holder, the locking lever being turned by the sliding member and having engaging portions which engage in ends of the positioning holes that are formed in the surface of the cassette which does not face the positioning means.

The position matching between positioning pins provided on the cassette insertion unit and the positioning holes of the disc cassette may be realized with higher accuracy under the locking state of the locking means even if the disc cassette size should be changed for example with changes in temperature.

Insertion and the removal of the positioning pins provided on the cassette insertion unit into and out of the positioning holes in the disc cassette can be carried out safely and positively with high stability.

The locking of the disc cassette by the locking means is effected in the direction of the thickness of the disc cassette to eliminate the necessity of providing the locking means laterally of the portion by which the cassette holder is introduced, thereby to enable the locking means to be provided within the apparatus with an optimum space factor.

A disc cassette inserted to the prescribed position within the apparatus will be locked by the positioning holes of the cassette.

The invention is diagrammatically illustrated by way of example in the accompanying drawings, in which:-
Figure 1 is a diagrammatic plan view showing an example of locking means of previously proposed kind in an optical disc player for locking a disc cassette;
Figure 2A is a side view showing parts of an optical disc player showing locking by a locking unit of a disc cassette introduced into a cassette holder, and especially showing a disc cassette inserted into the cassette holder;
Figure 2B is a side view showing parts of the optical disc player and showing an engaging member of a lock lever engaging resiliently with the bottom of a disc cassette introduced into the cassette holder;
Figure 2C is a side view showing parts of the optical disc player and showing the engaging member of the locking lever engaging in the engaging recess of the disc cassette introduced into the cassette holder;
Figure 3 is a plan view of the optical disc player showing the cassette holder and the locking unit;
Figure 4 is a sectional view taken on line IV-IV of Figure 3 and showing a disc cassette introduced into the cassette holder at the eject position;
Figure 5 is a sectional view taken on line V-V of Figure 3 and showing the state in which the disc cassette is attached to a cassette insertion unit;
Figure 6 is a front view of an optical disc player showing the cassette holder and the locking unit;
Figure 7 is an exploded perspective view showing the locking unit;
Figure 8 is a diagrammatic plan view for understanding the operation of a shutter of the disc cassette;
Figure 9 is a perspective view showing an example of a disc cassette;
Figure 10A is a side view showing parts of an embodiment of recording/reproducing apparatus according to the invention in the form of an optical disc player and showing locking by a locking unit of a disc cassette introduced into a cassette holder, and especially showing an introduced disc cassette;
Figure 10B is a side view showing parts of the optical disc player of Figure 10A in the state in which the engaging member of the lock lever is resiliently engaged with the bottom of the disc cassette introduced into the cassette holder;
Figure 10C is a side view showing parts of the optical disc player of Figures 10A and 10B and showing the state in which the engaging member of the lock lever is engaged in the engaging recess of the disc cassette introduced into the cassette holder; and
Figure 11 is a perspective view of a lock lever employed in the optical disc player of Figures 10A, 10B and 10C.

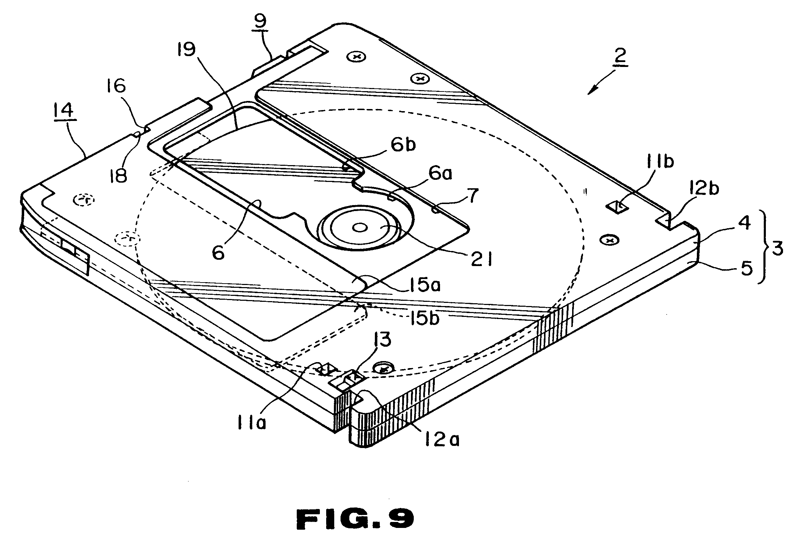

Referring to the drawings, a disc cassette 2 applied to a disc player comprises, as shown in Figure 9, an optical disc cassette casing 3 comprising a pair of flat upper and lower halves 4 and 5 formed of synthetic material and unitarily connected to each other substantially to form a parallelepiped of small thickness. On both major surfaces of the cassette casing 3, there are formed window openings 6, 6 which are to be confronted by a pickup device for recording and/or reproducing information signals to and from an optical disc 19 rotatably mounted within the casing 3. The openings 6, 6 extend from the centre towards the forward portion of the upper and lower halves 4, 5 along their length, and are each formed by a central circular section 6a, into which a disc table of a rotational disc drive unit to drive the optical disc 19 for rotation can intrude, and a rectangular section 6b continuous to the section 6a and for facing a pickup device.

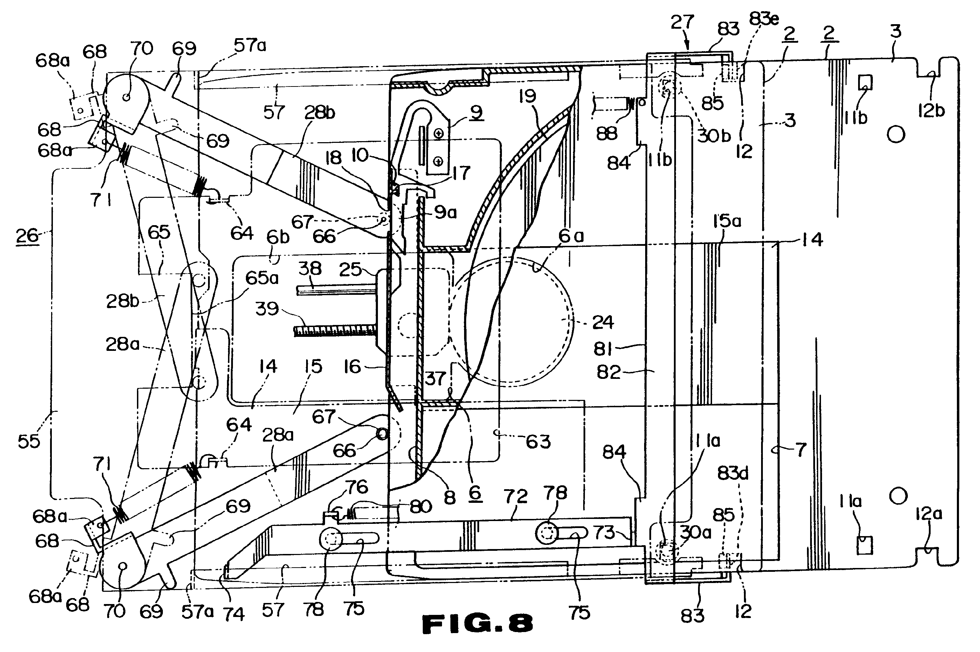

The upper and lower halves 4, 5 are formed with shutter receiving recesses 7, 7 extending along one side of the periphery of the openings 6, 6 therein. On the forward end face of the cassette casing 3 is formed a groove 8 extending the width of the cassette casing 3, as shown in Figure 8.

Within the cassette casing 3, there is provided a shutter locking member 9 partially extending into the groove 8. The shutter locking member 9 is formed of resilient synthetic material and, as shown in Figure 8, has its proximal end, that is, the end disposed within the inner recess of the cassette casing 3, secured to the cassette casing 3. An engaging recess 10 is formed substantially at the middle of the length of a resilient portion 9a extending approximately parallel to the lengthwise direction of the groove 8. The resilient portion 9a is maintained so that, when it is not thrust in a direction towards the inner recess of the cassette casing 3, that is, in the unlocking direction, one lateral side of the portion 9a is disposed approximately at the open side of the groove 8.

At the corners of the rear end face of the cassette casing 3 opposite to the forward side formed with the groove 8, a pair of positioning holes 11a, 11b are formed, as shown in Figure 9. The positioning holes 11a, 11b are substantially rectangular in contour when viewed in the direction of the thickness of the disc cassette 2, and are formed through the thickness of the cassette casing 3. On both sides at the rear of the cassette casing 3, a pair of engaging recesses 12a, 12b are of substantially U-shape and open in opposite directions to each other, when viewed in the direction of the thickness of the disc cassette 2 and are positioned in the vicinity of the positioning holes 11a, 11b.

The engaging recesses 12a, 12b can engage with cassette take-out members of an automatic supply device which can, in turn, take out a disc cassette 2 from a cassette containing a large number of the disc cassettes 2 or from the optical disc player. The automatic supply device can automatically supply and take out the disc cassettes 2 to and from the disc player.

A mistaken erasure inhibit member 13 is provided in the vicinity of one of the positioning holes 11a. When the signal recording surface is formed on each side of the optical case 19, the inhibit member 13 is formed on each of the upper and lower cassette halves 4 and 5.

A shutter 14 with a U-shaped cross section is movably mounted on the cassette casing 3 to open and close the window openings 6. The shutter 14 comprises a pair of closure members 15a, 15b to close the openings 6 and a connecting section 16 interconnecting the closure members 15a, 15b. An engaging piece 17 to engage with the engaging recess 10 of the shutter lock member 9 is formed on the connecting section 16, as shown in Figure 8, and a recess 18 is formed in close proximity to the engaging piece 17.

The shutter 14 is supported by the cassette casing 3 to slide along its width with the closure members 15a, 15b located within the shutter accommodating recesses 7, 7 formed in the cassette casing 3. When the shutter 14 is positioned to close the openings 6, 6 of the cassette casing 3, it is prevented from being shifted from the closure position by the engaging piece 17 engaging within the engaging recess 10 of the locking member 9. This locked state of the shutter 14 is released by the resilient portion 9a of the locking member 9 being thrust in the unlocking direction. The shutter may be moved to a position opening the window openings 6, 6 by thrusting the shutter from such unlocked state in the direction for opening the window opening 6, 6.

It will be noted that, with the shutter 14 in the closure position, the recess 18 formed in the connecting section 16 is positioned to face the forward end of the resilient portion 9a of the locking member 9.

The optical disc 19, rotatably accommodated within the cassette casing 3, has signal recording surfaces on both of its sides, and is provided with a substantially disc-shaped central adhesion plate 21 formed of a magnetic material.

The optical disc 19 is accommodated for rotation within the cassette casing 3, with the adhesion plate 21 facing the circular section 6a of the opening 6 of the cassette half 3.

When the shutter 14 is moved to its open position, a portion of the optical disc 19, that is, a portion of the signal recording surface and the periphery of the disc 19 inclusive of the adhesion plate 21, faces towards the outside of the cassette casing 3.

The optical disc player, to which the above described disc cassette 2 is mounted, will be hereafter explained.

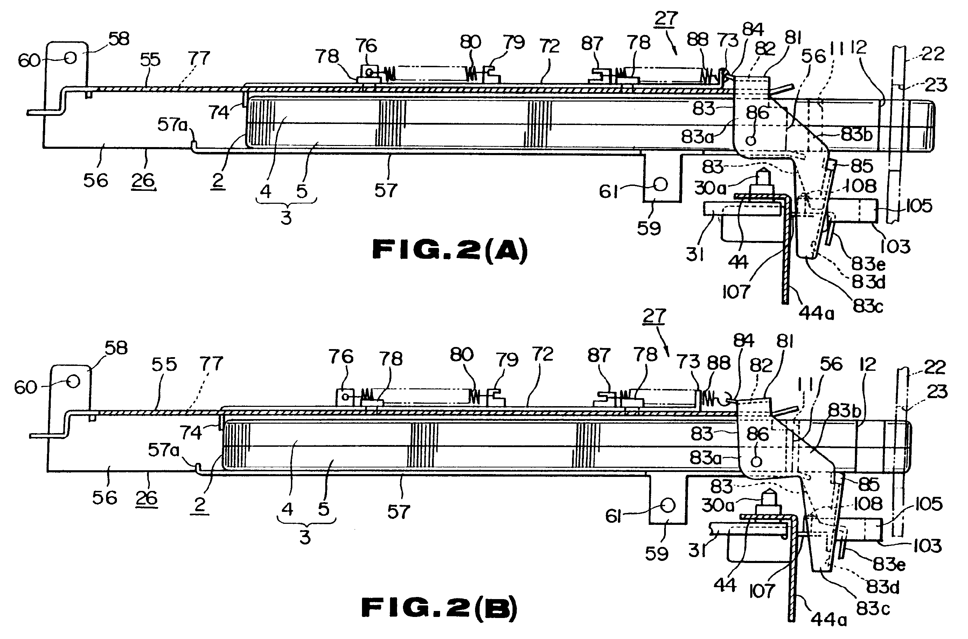

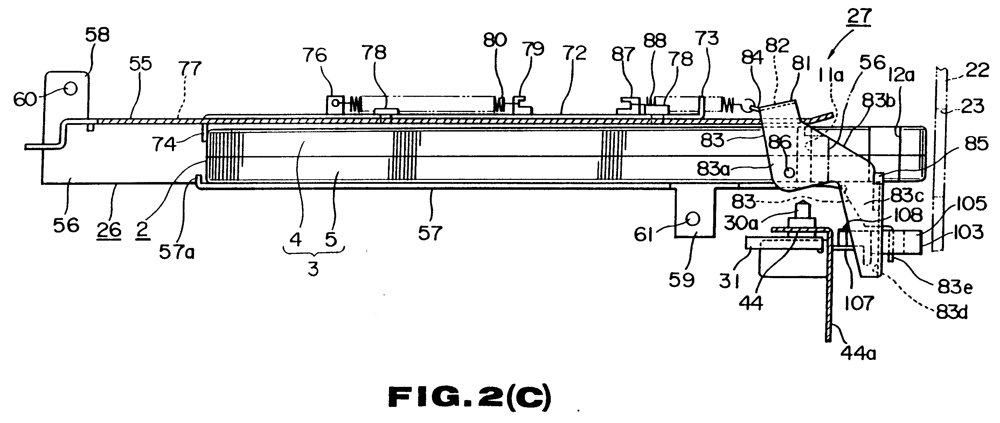

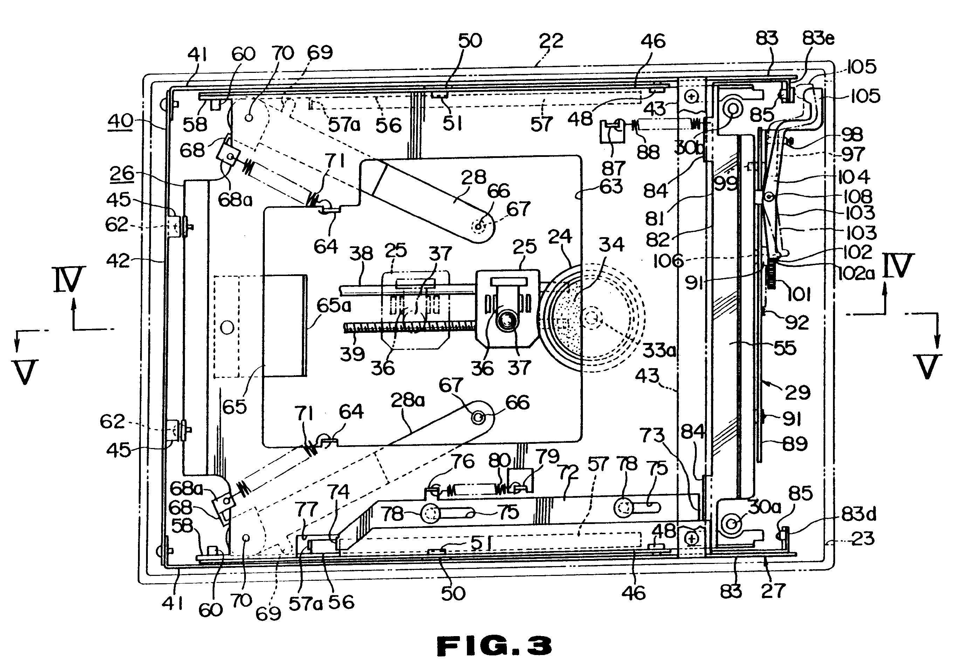

As shown in Figures 2 and 3, the optical disc player comprises an outer casing 22 forming a main body. An elongate cassette inlet opening 23 is transversely formed in the upper front surface portion of the casing 22.

Within the interior of the optical disc player, there are provided a rotational disc drive device provided with a disc table 24 to which the optical disc 19 is mounted detachably, a reproducing section including an optical pickup device 25 for reading the signals recorded on the disc 19 with associated circuitry (not shown), a cassette loading section including a cassette holder 26 into which the disc cassette 2 is removably loaded, a locking unit 27 for locking the optical disc cassette 2 inserted to the prescribed position within the cassette holder 26, a pair of shutter opening levers 28, 28 to open the shutter 14 of the disc cassette 2 and a lift unit 29 vertically to shift the cassette holder 26.

When a disc cassette 2 introduced into the casing 22 through the inlet opening 23 is introduced to a predetermined position within the cassette holder 26, it is locked to the cassette holder 26 by the locking unit 27. As the disc cassette is introduced into the cassette holder 26, the shutter 14 is moved by the shutter opening levers 28a or 28b to its open position to open the windows 6, 6. The cassette holder 26 is then caused to descend by the lift unit 29 until the disc cassette 2 is attached to the cassette insertion unit. At this time, positioning pins 30, 30 provided on the chassis are introduced into the positioning holes 11a, 11b of the cassette casing 3 to position the disc cassette 2 relative to the reproducing section. Substantially at the same time that the disc cassette 2 is attached to the cassette insertion unit, the adhesion plate 21 of the optical disc 19 is attracted by a magnet 34 provided at the centre of the disc table 24 and the unrecorded inner peripheral portion of the optical disc 19 is supported by a disc supporting outer peripheral portion of the disc table 24, so that the disc 19 is attached to the disc table 24. The optical pickup device 25 faces the signal recording surface of the optical disc 19. As the disc table 24 is turned from this state, the optical disc 19 is turned in unison therewith, and a laser beam from the pickup device 25 falls on the surface of the optical disc 19 to read or record signals from or on the disc 19.

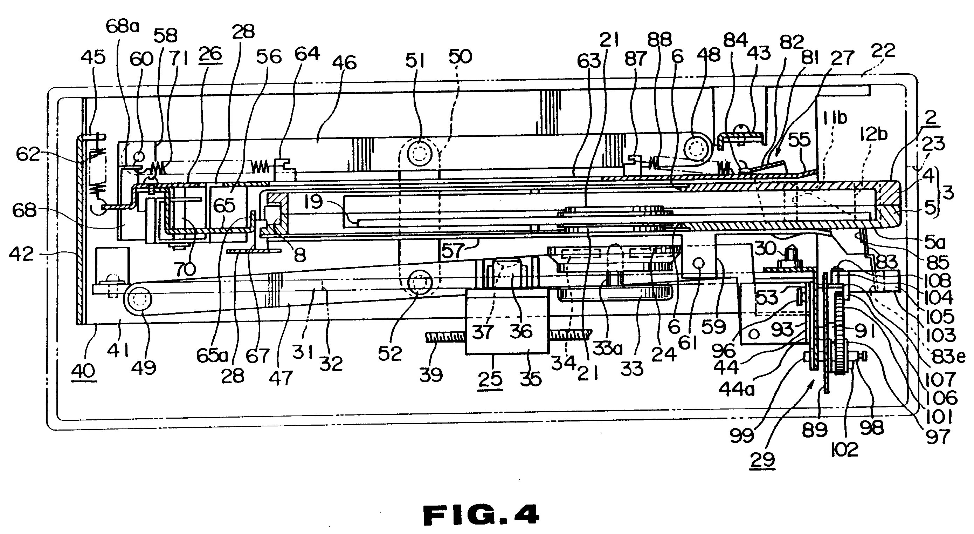

A chassis 31 is disposed within the outer casing 22 and positioning pins 30a, 30b are mounted on the transverse sides on the forward end of the chassis 31 to protrude upwards, which a large opening 32 is formed, as shown in Figure 4.

An electric motor 33 is rotationally to drive the disc is provided on the lower surface of the chassis 31 with a rotary shaft 33a thereof projecting above the chassis 31 through the opening 32. The disc table 24 is secured to the rotary shaft 33a.

The disc table 24 is in the form of an axially extending cylinder of a short length open at the top and having the magnet 34 disposed within the interior thereof.

The optical pickup device 25 is formed by an optical block 35 enclosing a laser source or optical elements, and a biaxial driving member 36 supported on the upper surface of the optical block 35. An object lens 37 is attached to the upper end of the biaxial driving member 36 so that the laser beam emitted from the laser source is conducted via an optical system so as to be projected above the object lens 37, that is perpendicularly towards the optical disc 19.

As shown in Figure 3, a guide shaft 38 and a screw shaft 39 are provided below the chassis 31 in the fore and aft directions and parallel to each other, with the optical pickup device 25 being supported so as to be movable in the fore and aft directions along the guide shaft 38 and the screw shaft 39. The optical pickup device 25 is shifted in the left and right direction as viewed in Figure 3 or in the fore and aft directions by the screw shaft 39 being rotated by an electric motor (not shown).

To the chassis 31 is mounted a frame 40 forming a cassette loading section. The frame 40 comprises a pair of side plates 41, 41 a rear plate 42 interconnecting the rear portions of the side plates 41, 41, a rod 43 interconnecting the upper forward ends of the side plates 41, 41, and a front plate 44 having an L-shaped cross-section interconnecting the lower ends of the forward edges of the side plates 41, 41. The frame 40 is open on the major portions of the upper, lower and front sides.

On the inner sides of the side plates 41, 41 of the frame 40, supporting arms 46, 47; 46, 47 are supported vertically movably to support the cassette holder 26. The supporting arms 46, 47; 46, 47 are formed as elongate plates having approximately the same length in the fore and aft directions. The forward ends of the upper supporting arms 46, 46 are rotatably supported by shafts 48, 48 at positions close to the upper edge at the forward ends of the side plates 41, 41 of the frame 40, while the rear ends of the lower supporting arms 47, 47 are rotatably supported by shafts 49, 49 at positions close to the lower edge towards the rear ends of the side plates 41, 41. The upper and lower supporting arms 46, 46; 47, 47 are rotatably connected at about the mid portions to the upper and lower ends of connecting pieces 50, 50 by pins 51, 52; 51, 52.

The supporting arms 46, 47; 46, 47 are supported so as to be rotatable substantially vertically, while the respective rotatory ends can shift vertically in synchronism with each other.

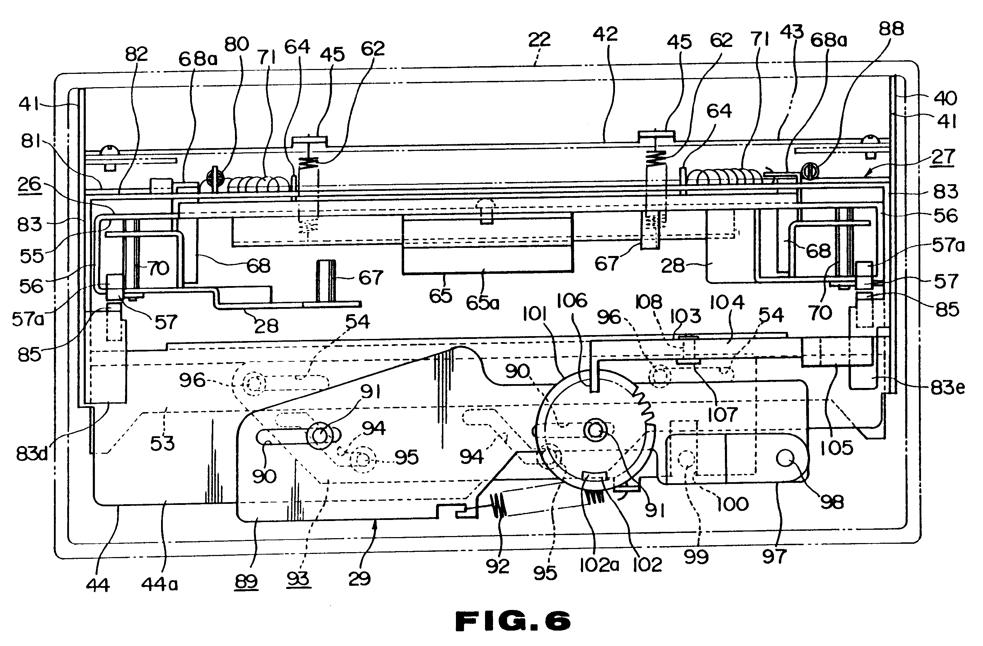

A connecting plate 53 is secured to the forward ends of the lower supporting arms 47, 47 at the left and right side ends and substantially in contact with the upper ends of the inner surface of a lower piece 44a of the front plate 44. Elongate engaging holes 54, 54, Figure 6, are formed in the left and right direction and at two spaced apart positions of the connecting plate 53.

The cassette holder 26 is substantially in the form of an inverted letter U and if formed by a ceiling plate 55 which has the form of a rectangle slightly less than the plan contour of the frame 40 and left and right side walls 56, 56 projecting downward from both side edges of the ceiling plate 55. Bottom pieces 57, 57 interrupted at several positions are projectedly mounted on the lower edge of the side walls 56, 56 towards facing sides. The spacing between the bottom pieces 57, 57 and the ceiling plate 55 is selected so as to be substantially equal to the thickness of the disc cassette 2.

The rear ends of the bottom pieces 57, 57 are formed with control pieces 57a, and 57a and the two corners on the front side of the ceiling plate 55 are cut out in the form of a letter U.

Projecting pieces 58, 58 are formed on the rear upper edges of the side walls 56, 56, while projecting pieces 59, 59 project down from the lower front ends. The upper ends of the rear projecting pieces 58, 58 are rotatably connected to the rotatory ends of the upper supporting arms 46, 46 by pins 60, 60, while the lower ends of the front projecting pieces 59, 59 are rotatably connected to the rotatory ends of the lower supporting arms 57, 57 by pins 61, 61.

Thus, the cassette holder 26 is supported by left and right side pairs of the supporting arms 46, 47; 46, 47 to the frame 40 for movement vertically, and the vertical movement of the cassette holder is performed at all times in the horizontal position.

Two tension springs 62, 62 are provided under tension between spring retainers 45, 45 provided on the rear plate 42 and the rear end of the ceiling plate 55 of the cassette holder 26, such that the cassette holder 26 is perpetually biased in the upward direction by the force of the tension springs 62, 62.

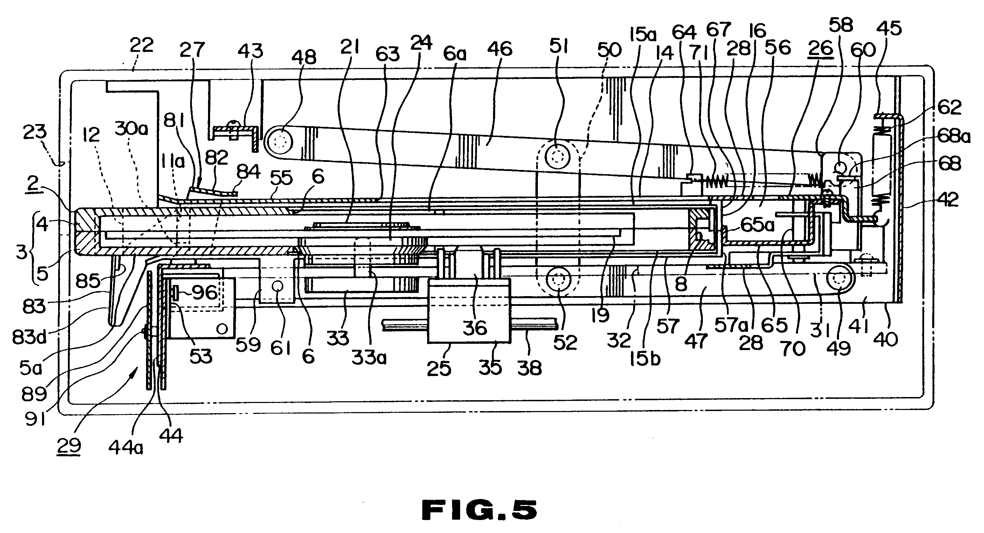

The cassette holder 26 is moved vertically by the lift unit 29 between an eject position at substantially the same height level as the cassette inlet opening 23 of the outer casing 22 as shown in Figure 4 and a loading complete position at a slightly lower height level than the eject position as shown in Figure 5.

The pair of shutter opening levers 28a, 28b shown in Figure 3 face the inner side of the outer casing 2, or the forward end of the disc cassette 2 inserted into the cassette holder 26. The shutter opening levers 28a, 28b are in the form of plates elongate in substantially the fore and aft direction when viewed from above. The levers are bent at substantially the mid positions along their length into the form of cranks when viewed from the lateral sides so that the forward ends of the left and right shutter opening levers 28a, 28b are at different height levels. A shaft 66 projects upwardly from the forward end of the shutter opening lever 28a, while a shaft 66 projects downwardly from the forward end of the other lever 28b. Pressure rolls 67, 67 are rotatably supported by the shafts 66, 66.

The rear ends of the shutter opening levers 28a, 29b are substantially in the form of a letter U when viewed along the length thereof.

Spring retainers 68, 68 project from the rear edges of the rear ends of the shutter opening levers 28a, 28b, with the upper ends thereof reaching a position slightly higher than the ceiling plate 55 of the cassette holder 26. Spring retainers 68a, 68a are provided on these upper ends.

Stop members 69 project outwards from the rear ends of the shutter opening levers 28a, 28b.

The shutter opening levers 28a, 28b are mounted for rotation by support shafts 70, 70 provided on both rear sides of the ceiling plate 55 of the cassette holder 26 in a depending manner. The shutter opening levers 28a, 28b are biased into rotation by tension springs 71, 71 stretched under tension between the spring retainers 68a, 68a and retainers 64 on the ceiling plate 55 of the cassette holder 26. The shutter opening lever 28a is perpetually biased for clockwise rotation as viewed in Figure 3 under the tensile force of the spring 71, while the shutter opening lever 28b is perpetually biased for counterclockwise rotation as viewed in Figure 3 under the tensile force of the tension spring 71. The lever 28a is inhibited from further clockwise rotation by the stop member 69 abutting on the lower rear end of the left side wall 56 of the cassette holder 26 under the condition in which the lever 28a is not subjected to a pressure biasing the lever into counterclockwise rotation. The lever 28b, on the other hand, is inhibited from further counterclockwise rotation by the stop member 69 abutting on the lower rear end of the right side wall 56 of the cassette holder 26 under the condition that the lever is not subjected to a force biasing it into clockwise rotation.

The shutter opening lever 28a is maintained, when it is not thrust counterclockwise, at a position in which, as shown in Figure 3, the pressure roller 67 is shifted to a position slightly towards the left of the centre of the cassette holder 26, referred to hereafter as the standby position for the lever 28a. Similarly, the shutter opening lever 28b is maintained, when it is not thrust clockwise, at a position in which, as shown in Figure 3, the pressure roller 67 is shifted to a position slightly towards the right of the centre of the cassette holder 26, referred to hereafter as the standby position for the lever 28b.

The disc cassette 2 is loaded into the cassette holder 26 and the shutter 14 is moved to the opening position by the shutter opening levers 28a, 28b, in the following manner.

It will be noted that the optical disc 2 is in an orientation in which the signal recording surface is directed downwardly, referred to hereafter as the first direction, when the disc cassette is introduced into the casing 22 with the side of the locking member 9 directed inward. The direction of the disc thickness in which the one signal recording surface of the disc 19 is read is referred to as the first direction. The direction which is the reverse of the first direction i.e. when the other signal recording surface is read, is referred to as the second direction.

When the disc cassette 2 is introduced through the inlet opening 23 into the casing 22 from the state in which the cassette holder 26 is at the aforementioned eject position, and the cassette reaches the mid position, the pressure rollers 67, 67 of the shutter release levers 28a, 28b abut the forward end face of the cassette casing 3 of the disc cassette 2.

When the disc cassette 2 is introduced into the cassette holder 26 in the first direction, the pressure roller 67 of the shutter opening lever 28a located towards the left when looking from the inserting side of the disc cassette 2 abuts on the forward end of the resilient portion 9a of the locking member 9 through the recess 18 of the connecting section 16 of the shutter 14 to thrust the forward end in the unlocking direction. When the disc cassette 2 is introduced into the cassette holder 21 in the second direction, the pressure roller 67 of the shutter opening lever 28b located towards the right when viewed from the inserting side of the disc cassette 2 abuts on the forward end of the resilient portion 9a of the locking member 9, see Figure 8, to thrust the forward end in the unlocking direction, so that locking of the shutter 14 by the locking member 9 is released.

When the disc cassette 2 is introduced further into the cassette holder 26, the cassette casing 3 thrusts the left pressure roller, with the shutter opening levers 28a, 28b being turned counterclockwise and clockwise, respectively. At this time, one of the pressure rollers disposed within the recess 18 of the shutter 14 is moved as it thrusts the side edge of the recess 18 laterally, so that the shutter 14 is shifted towards its open position.

Substantially at the same time that the shutter 14 reaches the open position, as shown by the double dotted chain line in Figure 8, the pressure roller 67 abuts the forward end 65a of an abutment 65 provided on the cassette holder so that rotation of the respective shutter opening levers 28a, 28b is inhibited. Simultaneously, the cassette casing 3 abuts the control pieces 57a, 57a of the bottom pieces 57, 57 of the cassette holder 26. In this state, the disc cassette 2 is completely introduced in position into the cassette holder 26.

It will be noted that, when the disc cassette 2 is inserted in position within the cassette holder 26, engaging members of the locking unit 27 are, as later described, engaged with the engaging recesses 12a, 12b formed in the cassette casing 3 to inhibit forward movement of the disc cassette 2. In this manner, the disc cassette 2 is locked to the cassette holder 26.

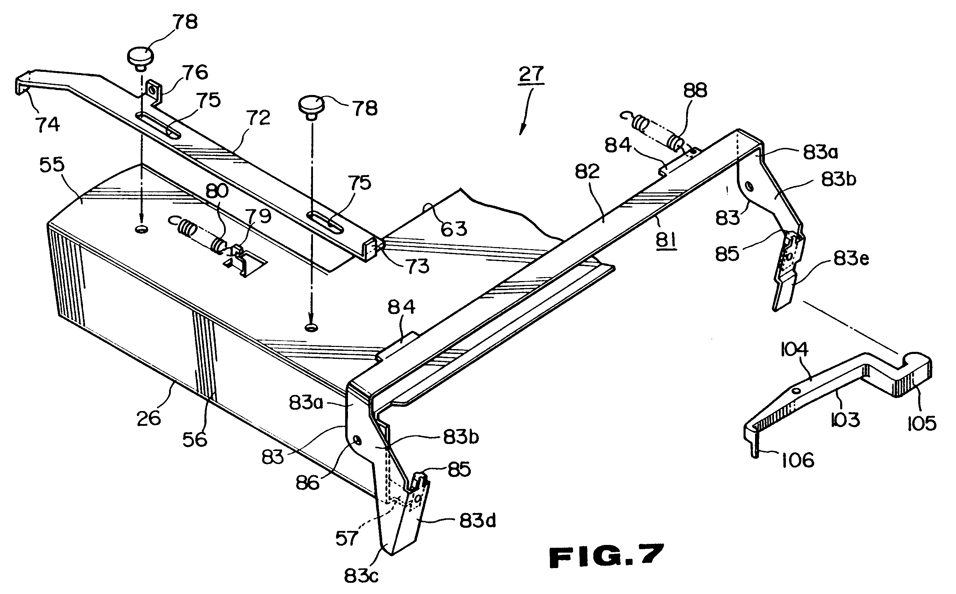

As shown in Figure 7, the locking unit 27 comprises a locking lever 81 supported so as to be pivotable substantially vertically, that is, substantially in the same direction as the thickness of the disc cassette 2 introduced into the cassette holder 26, a tension spring 88 and a stop slider 72 controlling the position of the lock lever 81.

The stop slider 72 of the locking unit 27 is formed as a plate elongate in the fore and aft directions and has an upright stop member 73 and a downwardly projecting thrust member 74 at the forward and rear ends thereof, respectively. With the thrust member 74 of the stop slider 72 projecting down through the ceiling plate 55 through an elongate opening 77 formed at the rearward side of the ceiling plate 55, guide pins 78, 78 implanted on the ceiling plate 55 are engaged in elongate openings 75, 75 in the slider 72, the openings 75, 75 having their long axes extending longitudinally, so that the stop slider is supported by the ceiling plate 5 of the cassette holder 26 so as to be movable by a predetermined extent in the fore and aft directions. A tension spring 80 is mounted under tension between spring retainers 79 provided on the ceiling plate 55 and a spring retainer 76 provided on the rear lateral side of the stop slider.

Thus the stop slider 72 is perpetually biased for forward movement by the tension spring 80. Unless it is moved rearwardly, the rear edges of the elongate openings 75, 75 abut on the guide pins 78, 78 so that they are maintained at the position shown in Figure 3, hereafter referred to as the forward position. With the stop slider 72 at the forward position, the stop member 73 is positioned substantially below the rod 43 of the chassis 40. The locking lever 81 is integrally formed by a connecting strip 82 in the form of a plate elongate in the left and right direction with a length about equal to the length in the left and right direction of the cassette holder 26 and a pair of arms 83, 83 extending substantially downwardly from the left and right ends of the connecting strip 82. A pair of projecting members 84, 84 are formed towards the left and right ends of the connecting strip 82 and project rearwardly and obliquely upwardly.

It will be noted that one of the two projecting members 84, 84 that is positioned towards the left in Figure 7, hereafter referred to as an abutment portion, is the portion that abuts on the stop member 73 of the stop slider 72. The projecting member 84 towards the right in Figure 7, hereafter referred to as the spring retainer, is the portion engaging with one end of a tension spring, as later described.

The pair of arms 83, 83 are crank-shaped when viewed in the left and right direction. One arm 83 towards the left in Figure 7 is integrally formed by an upper portion 83a extending down vertically from the left end of the rod 83, an intermediate portion 83b extending from the lower end of the upper portion 83a forwardly and slightly obliquely downwardly, a lower portion 83c extending from the forward end of the portion 83b downwardly and slightly obliquely downwardly, and a vertically elongate rectangular engaging portion 83d projecting from the forward edge of the lower member 83c toward the right. The other arm 83 towards the right in Figure 7 is integrally formed by an upper portion 83a and an intermediate portion 83b similar in profile to the upper portion 83a and the intermediate portion 83b of the one arm 83, and an engaging portion 83e elongate vertically and having the upper end continuing with the forward end of the intermediate piece 83b.

The upper ends of the respective engaging pieces 83d, 83e of the left and right arms 83, 83 are of narrow width and approximately at the same height level. To the rear sides of these arms are affixed engaging members 85, 85 of a smaller size formed of synthetic resin.

The locking lever 81 is so arranged that, with the connecting strip 82 positioned at a distance from the upper surface of the forward end of the ceiling plate 55 of the cassette holder 26, the connecting portions between the upper portions 83a, 83a and the intermediate portions 83b, 83b of the left and right arms 83, 83 are rotatably supported by supporting shafts 86, 86 at the forward ends of the left and right side walls 56, 56 of the cassette holder 26.

A spring retainer 87 is integrally formed at a position of the ceiling plate 55 of the cassette holder 26 rearwardly spaced apart from the spring retainer 84 of the lock lever 81, and the tension spring 88 is provided between the spring retainer 87 and the spring retainer 84 of the lock lever 81. The tension spring 88 is selected so as to have a spring force weaker than that of the tension spring 80 biasing the stop slider 72 towards a forward movement.

Thus the lock lever 81 is pulled rearwardly and slightly downwardly by the spring 88 until its spring retainer 84 is close to the ceiling plate 55 of the cassette holder 26 so that the force of counterclockwise rotation in Figure 2 is afforded to the lock lever 81 until the lock lever 81 assumes the above position, hereafter referred to as the locking position, while it is maintained at the locking position when it arrives at such position.

When the stop slider 72 is at the aforementioned forward position, the abutment 84 abuts on the stop member 73 of the stop slider 72 from the forward side, so that, as shown in Figure 2A, the locking lever 81 is maintained at a position in which the engaging members 85, 85 are at a height slightly lower than the bottom pieces 57, 57 of the cassette holder 26, hereafter referred to as a non-locking position.

When the stop slider 72 is at the forward position, the locking lever 81 is maintained at the non-locking position. When the stop slider 72 is shifted towards the rear from the forward position, the locking lever 81 is shifted to a locking position, under the tensile force of the tension spring 88. When the locking lever is at the locking position, the engaging members 85, 85 are at a height level higher than the bottom pieces 57, 57 of the cassette holder 26.

The optical disc cassette 2 is locked to the cassette holder 26 by the above described locking unit 27 in the following manner.

When the optical disc cassette 2 is inserted into the cassette holder 26, the cassette casing 3 abuts on the pressure rollers 67, 67 of the shutter opening levers 28, 28. As the disc cassette 2 is further inserted, the left end of the cassette casing 2 abuts on the thrust piece 74 of the stop slider 72, as shown in Figure 2A to thrust the thrust member 74 rearwards.

This causes the stop slider 72 to be moved rearwards from the forward position, so that the stop member 73 recedes rearwards from the abutment portion 84 of the locking lever 81. This causes the locking lever 81 to be turned counterclockwise (as viewed in Figures 2A, 2B and 2C) to cause the engaging members 85, 85 thereof to abut resiliently on the bottom of the cassette casing 3 from the underside, as shown in Figure 2B.

The disc cassette 2 is further thrust rearwards from this state. At substantially the same time as the cassette casing 3 abuts on the control pieces 57a, 57a provided on the rear ends of the bottom pieces 57, 57 of the cassette holder 26, the engaging recesses 12a, 12b formed in the cassette casing 3 are positioned to overlie the engaging members 85, 85 of the locking lever 81, so that the locking lever 81 can turn further counterclockwise until the engaging members 85, 85 are engaged from the underside in the engaging recesses 12a, 12b as shown in Figure 2C.

Thus, at substantially the same time as the disc cassette 2 introduced into the cassette holder 26 reaches the preset inserted position within the cassette holder 26, the engaging members 85, 85 of the locking lever 81 are engaged from the underside with the engaging recesses 12a, 12b formed in the cassette casing 3, so that the movement of the disc cassette 2 in the fore and aft direction is inhibited. On the other hand, rearward movement of the disc cassette is also controlled by the control members 57a, 57a of the bottom pieces 57, 57 whereby it is locked to the cassette holder 26. At this time, the positioning holes 11a, 11b are positioned directly above the positioning pins 30a, 30b.

The locking of the disc cassette 2 by the locking lever 81 is released by the unlocking lever as later described.

The lift unit for vertically shifting the cassette holder 26 into which the disc cassette 2 is inserted and accommodated will be explained. As shown in Figure 6, the lift unit includes a first slider 89 and a second slider 93. The first slider 89 is supported for movement within a predetermined distance in the left and direction by guide pins 91, 91 projecting from the front side of the lower piece 44a of the front plate 44 of the chassis 40 slidably engaging in elongate holes 90, 90 formed in the slider plate 89 having their longer axes extending in the longitudinal direction. The second slider 93 is perpetually biased towards the left as viewed in Figure 6 under the tension of a tension spring 92 provided between it and the first slider 89. The second slider 93 is formed with cam grooves 94, 94 spaced from each other in the left and right direction. In these cam grooves 94, 94 are slidably engaged guide pines 95, 95 projecting rearwardly from the lower end of the lower piece 44a of the front plate 44 of the chassis 40.

When viewed from the forward side, the cam grooves 94, 94 extend down rightwards at approximately 45° relative to the vertical direction, such that the second slider is shifted downwards or upwards when it is moved towards the right or left, respectively.

Connecting pins 96, 96 project towards the rear from the upper end of the second slider 93 and are slidably engaged in the engaging elongate holes 54, 54 formed in the connecting plate 53 interconnecting the forward ends of the lower supporting arms 47, 47.

Thus, when the second slider 93 is shifted towards the right, the connecting plate 53 is thrust down so that the supporting arms 47, 47 are turned clockwise as viewed in Figure 4 to shift the cassette holder 26 downwards. When the second slider 93 is shifted towards the left, the connecting plate 53 is thrust in the upward direction, so that the supporting arms 47, 47 are turned counterclockwise in Figure 4 to lift the cassette holder 26.

The first slider 89 and the second slider 93 are connected by a connector 97 for movement integrally. The right-side end of the connector 97 is connected to a connecting pin 98 projecting from the right side end of the first slider 89, while the rear end of a pin 99 projecting from the left end towards the rear is slidably vertically engaged in a recess 100 formed towards the lower right side edge of the second slider 93, whereby the sliders 89, 93 are connected to each other for movement integrally in the left and right direction.

A cam gear 101 is rotatably supported at the forward end of the guide pin 91 which supports the first slider 89 and is located towards the right in Figure 6. A cam projection 102 is formed on the front side of the cam gear 101 in the vicinity of the dedendum circuit.

The cam projection 102 has the shape of a rectangular triangle when viewed from above.

An unlocking lever 103 is carried for rotation by a pin 108 mounted on a supporting member 107 projecting forwards from the upper end of the lower member 44a of the front plate 44 of the frame 40. As shown in Figure 7, the unlocking lever 103 is formed integrally by an elongate main portion 104 extending in the left and right direction, a thrusting portion 105 extending from the right end of the main portion 104 and in the shape of a letter U when viewed from above, and a columnar thrust portion 106 projecting down from the forward end of the left side in the form of an inverted letter U when viewed from above the main portion 104.

The unlocking lever 103 is supported so that, with the thrust portion 106 facing to the upper end of the cam gear 101 from the forward side, as shown in Figure 6, the mid portion along the length of the main portion 104 is pivotally mounted to the pin 108 mounted upright on the supporting member 107 projectedly mounted to the forward plate 44 of the frame 40. The unlocking lever 103 is perpetually biased to be turned clockwise as viewed in Figure 2 by resilient means (not shown).

Thus, unless a thrust force tending to turn the unlocking lever 103 counterclockwise is applied to the lever 103, the lever 103 is maintained at a position in which its thrust portion 106 contacts the forward surface of the upper end of the cam gear 101. In this position, the right hand end of the thrust portion 105 faces the vicinity of the engaging piece 83c of the right side arm 83 of the locking lever 81 from the rear side, as shown by a solid line in Figure 3.

When the disc cassette 2 is introduced to the prescribed position within the cassette holder 26, the disc cassette 2 is locked with a small space allowance with respect to the cassette holder 26, as discussed above, and the first slider 89 is moved from this position towards the right by driving means (not shown) so that the cassette holder 26 is moved to a loading end position. Simultaneously, the positioning pins 30, 30 provided on the chassis 31 are introduced into the positioning holes 11a, 11b formed in the cassette casing 3 of the disc cassette 2 to position the disc cassette 2 relative to the reproducing section.

It will be noted that the engaging recesses 12a, 12b, are extremely close to the positioning holes 11a, 11b and are controlled by the locking lever 81, whereby the position of the cassette casing 3 with respect to the cassette holder 26 is determined, so that substantially no dimensional errors are caused in the spacing between the engaging recesses 12a, 12b and the positioning holes 11a, 11b, despite occasional dimensional errors in the cassette casing 3. Therefore, with the disc cassette 2 locked to the cassette holder 26, the positioning holes 11a, 11b and the positioning pins 30a, 30b are positioned on the same axis so that the positioning pins 30a, 30b may be introduced smoothly into the positioning holes 11a, 11b. Substantially simultaneously, the centre of the disc 19 is placed on the disc table 24, while the adhesion plate 21 is attracted by the magnet 34 provided on the disc table 24, so that the disc 19 is mounted to the disc table 24.

When the reproducing operation is started from this state, the optical disc 19 is revolved integrally with the disc table 24, at the same time as the optical pickup device 25 is moved to a position facing a position on the signal recording area of the signal recording surface where the signals to be read are recorded. The laser beam emitted from the object lens 37 is irradiated on the signal recording surface, with the return beam being read by a reader provided on the optical block 35. For recording the information signals on the optical disc 19, the optical pickup device 25 is shifted to a position facing a position of the recording area of the signal recording surface of the optical disc 19 where the recording is to be made, similarly to the reproducing operation. A laser beam emanating from the object lens 37 of the optical pickup device 25, which is at a higher level than the output level at the time of signal reproduction, is irradiated on the signal recording surface for recording. When the operation of taking out the optical disc 2 is started from the state in which the cassette holder 26 is at the loading end position, the first slider 89 is shifted towards the left, while the cassette holder 26 is returned to the eject position. The cam gear 101 performs nearly one complete revolution counterclockwise as viewed in Figure 6 at a predetermined timing. A thrust surface 102a of the cam projection 102 provided on the cam gear 101 thrusts the thrust portion 106 of the unlocking lever 103 substantially forwardly and obliquely towards the right.

At this time, the unlocking lever 103 is turned counterclockwise, as indicated by the double dotted chain line in Figure 3, to thrust the engaging member 83e of the other arm 83 of the lock lever 81 towards the right as viewed in Figure 3, the thrust portion 105 of which is at the locking position, so that the locking lever 81 is returned to the non-locking position. It should be noted that, when the lock lever 81 is at the locking position, the engaging member 83c approaches the thrust portion 105 of the unlocking lever 103 from the rear side.

Thus the engaging members 85, 85 of the locking lever 81 are retracted downwards away from the engaging recesses 12a, 12b of the cassette half 3 of the optical disc cassette 2, to release locking of the disc cassette 2 by the locking lever 81. After locking is released, the shutter opening levers 28a, 28b, so far kept in the opening end position against the force of the springs 71, 71, are shifted to the stand-by position to thrust the disc cassette 2 forward.

The disc cassette 2 then protrudes by about a half length out of the cassette inlet opening 23.

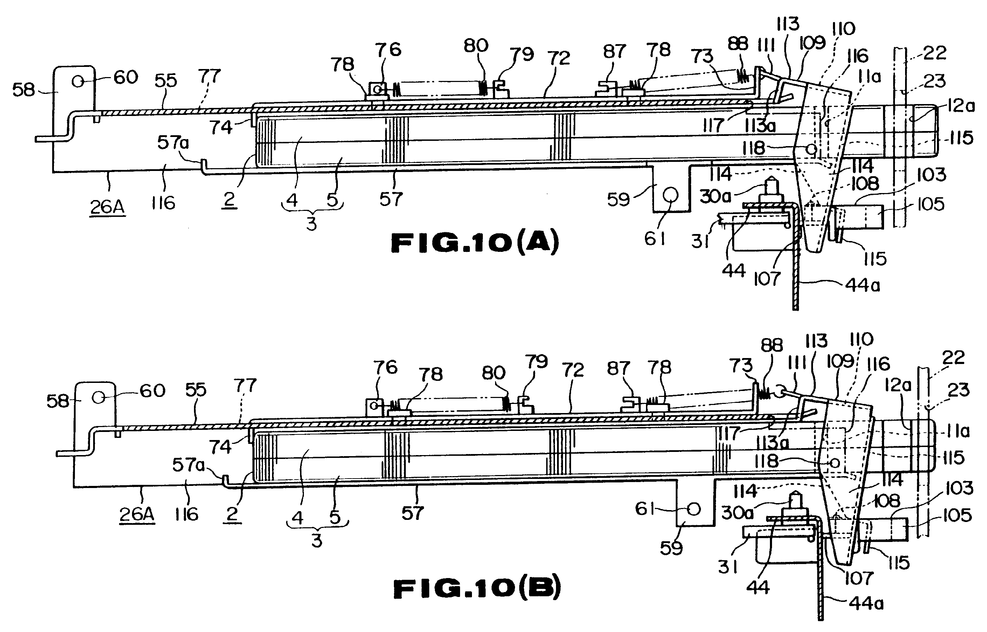

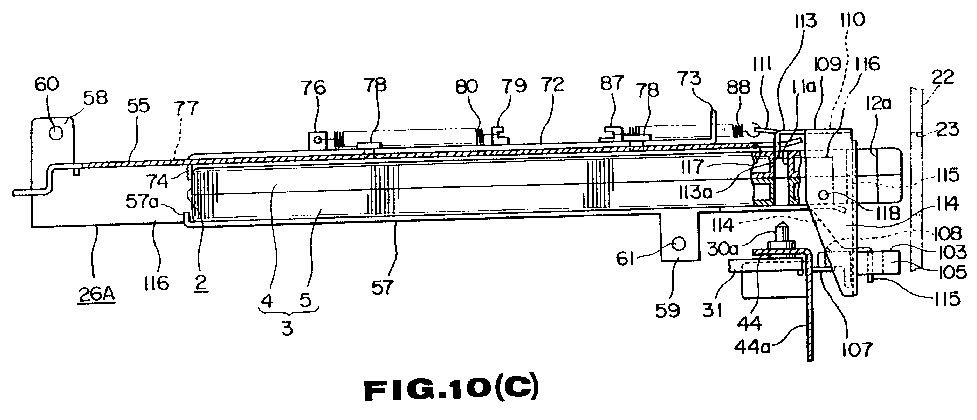

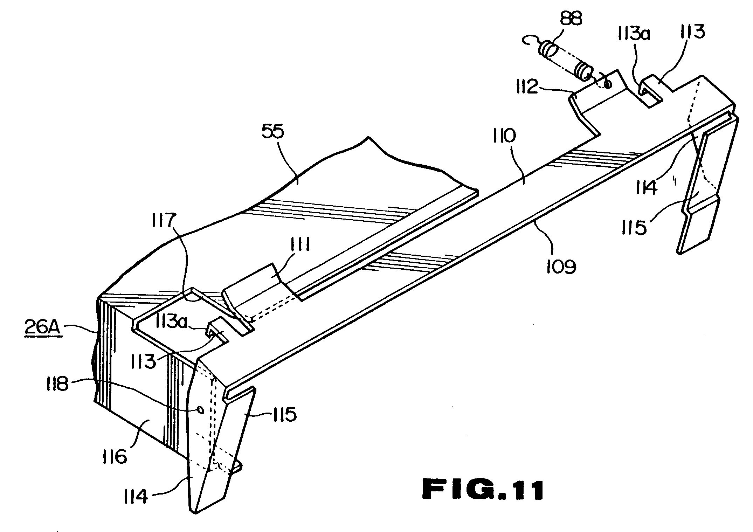

An embodiment of the recording/reproducing device according to the invention is shown in Figures 10 and 11 which relate to an optical disc player. In distinction from the disc player of the preceding kind where the disc cassette is locked to the cassette holder with the aid of the engaging recesses formed in the underside of the cassette casing of the disc cassette, the disc player of this embodiment is so designed that the locking is performed with the aid of the positioning holes provided in the upper side of the cassette casing of the disc cassette. Only relevant portions are shown in Figures 10 and 11, the same reference numerals are used to depict components as in the preceding embodiment and only features distinct from the preceding embodiment will be explained.

A lock lever 109 in accordance with the invention and employed in the optical disc player shown in Figures 10 and 11 is formed in the shape of an inverted letter U elongate in the left and right direction when viewed in the fore and aft direction.

The lock lever 109 has a connecting strip 110 formed as an elongate plate extending in the left and right direction and having a size about equal to that of the main portion 82 of the locking lever 81. An abutment member 111 and a spring retain 112 project towards the rear from the left and right ends of the connecting strip 110, with the rear ends thereof being curved slightly upwardly. Engaging pieces 113, 113 project towards the rear from positions directly to the left of the abutment member 111 and to the right of the spring retainer 112, while engaging portions 113a, 113a are formed at the rear ends of the engaging pieces 113, 113 so as to project downwards.

From the left and right ends of the connecting strip 110, there are extended arms 114, 114 downwards, and bent pieces 115, 115 projecting from the forward edges towards the inside are integrally formed with these arms 114, 114.

The cassette holder 26A has substantially the same construction as that of the cassette holder 26 illustrated with reference to Figures 2 to 9. The forward ends of the left and right side walls are extended to a position slightly ahead of the forward ends of the respective side walls 56, 56 of the cassette holder 26 of the preceding embodiment.

The lock lever 109 is rotatably supported by supporting shafts 118, 118 at the forward ends of respective side walls 116, 116 of the cassette holder 26A, at the positions towards the upper ends of the left and right arms 114, 114, with the engaging portions 113a, 113a of the engaging piece 113, 113 being positioned to face the forward ends of recesses 117, 117 provided at respective corners of the ceiling plates 59 of the cassette holder 26A. The forward end of the tension spring 88 is engaged with the spring retainer 112 and the abutment member 111 is provided for abutting from the forward side on the stop member 73 of the stop slider 72 that is at the aforementioned forward position.

The optical disc cassette 2 is locked to the cassette holder 26A by the above described lock lever 109 in the following manner.

When the disc cassette 2 is introduced into the cassette holder 26A, the cassette casing 3 abuts the thrust member 74 of the stop slider 72. As the disc cassette is inserted further, the stop slider 72 is shifted towards the rear, whereby the stop member 73 of the stop slider 72 recedes rearwards from the abutment member 111 of the lock lever 104.

The locking lever 109 is turned counterclockwise as viewed in Figure 10B and, as shown in Figure 10B, the respective engaging portions 113a, 113a of the respective engaging pieces 113, 113 abut resiliently on the upper surface of the cassette half 3.

When the disc cassette 2 is introduced from this state to the prescribed position within the cassette holder 26, the positioning holes 11a, 11b formed in the cassette half 3 are positioned immediately below the engaging portions 113a, 113a, whereby when the locking lever 109 is further turned counterclockwise, as shown in Figure 10C, the engaging portions 113a, 113a are engaged from above in the positioning holes 11a, 11b.

As a result of such engagement, the disc cassette 2 is inhibited from moving in the fore and aft directions, so that the disc cassette 2 is locked to the cassette holder 26A.

The respective engaging portions 113a, 113a are at the upper ends of the positioning holes 11a, 11b and the height of the positioning pins 30a, 30b is about half the length of the positioning holes 11a, 11b. Thus, even when the positioning pins 30a, 30b are introduced into the positioning holes 11a, 11b together with the engaging portions 113a, 113a of the locking lever 109, the engaging portions 113a, 113a will not obstruct the insertion of the positioning pins 30a, 30b. Also, when the positioning pins 30a, 30b are introduced in the above described manner, the positioning pins will not push out the engaging portions 113a, 113a.

## Claims

1. Recording/reproducing apparatus for a disc cassette comprising
a disc cassette (2) rotatably accommodating a disc-like recording medium (19) and having positioning holes (11a, 11b) formed on both sides of the disc cassette (21) and aligned with the thickness of the disc cassette,
a holder (26) to hold the disc cassette (2) and being vertically movable so as to cause the disc cassette (2) selectively to take a first position in which the disc-like recording medium (19) is attached to rotational disc drive means (34) or a second position spaced above the first position,
means for shifting the holder (26) between the first position and the second position,
positioning means (30) to engage with the positioning holes (11a, 11b) in the disc cassette (2) when the holder (26) is in the first position thereby to position the disc cassette (2), and
locking means (109, 113a) on a locking lever (109) provided for rotation in the direction of the thickness of the disc cassette (2), the locking lever (109) being rotated substantially simultaneously with termination of insertion of the disc cassette (2) into the holder (26) to cause locking projections (113a) on the locking lever (109) to engage the disc cassette in the vicinity of the positioning holes (11a, 11b) of the disc cassette to lock the disc cassette (2) relative to the holder (26),
characterised in that
the locking lever (109) comprises a strip (110) which extends for the full width of the disc cassette (2) and has side arms (114) pivoted about pivots (118) which extend parallel to the lateral extent of the disc cassette (2); and
the locking means includes a sliding member (72) slidably mounted on the holder (26) to slide upon insertion of the disc cassette into the holder (26), the locking lever (109) being turned by the sliding member (72) and having engaging portions (113a, 113a) which engage in the ends of the positioning holes (11a, 11b) that are formed in the surface of the cassette (2) which does not face the positioning means (30).

2. Recording/reproducing apparatus according to claim 1, wherein the locking lever (109) is urged by urging means (88) in a direction in which the engaging portions (113a, 113a) are engaged with the positioning holes (11a, 11b) on the side of the disc cassette that is not facing to the positioning means (30).

3. Recording/reproducing apparatus according to claim 2, wherein the locking lever (109) is rotatably mounted to the holder and the holder has a recess (117) by which the engaging portions (113a, 113a) are engaged with the positioning holes (11a, 11b) on the side of the disc cassette that is not facing to the positioning means (30).

4. Recording/reproducing apparatus according to claim 1, further comprising unlocking means (103) driven by the means for shifting to release the locking by the locking means (109) when the holder (26) is shifted by the shifting means from the first position to the second position.

## Patentansprüche

1. Aufzeichnungs/Wiedergabevorrichtung für eine Plattenkassette, die aufweist:
eine Plattenkassette (2), die drehbar ein plattenförmiges Aufzeichnungsmedium (19) beherbergt und Positionslöcher (11a, 11b) hat, die auf beiden Seiten der Plattenkassette (21) gebildet sind und mit der Dicke der Plattenkassette fluchten;
einen Halter (26), um die Plattenkassette (2) zu halten, der in vertikaler Richtung bewegbar ist, damit die Plattenkassette (2) wahlweise eine erste Position einnehmen kann, bei der das plattenförmige Aufzeichnungsmedium (19) an der sich drehenden Plattenantriebseinrichtung (34) befestigt ist, oder eine zweite Position, die über der ersten Position beabstandet ist;
eine Einrichtung zur Verschiebung des Halters (26) zwischen der ersten Position und der zweiten Position;
eine Positionierungseinrichtung (30), die in die Positionierungslöcher (11a, 11b) in der Plattenkassette (2) eingreift, wenn der Halter (26) in der ersten Position ist, um dadurch die Plattenkassette (2) zu positionieren, und
eine Verriegelungseinrichtung (109, 113a) auf einem Veriegelungshebel (109), der zur Drehung in der Richtung der Dicke der Plattenkassette (2) vorgesehen ist, wobei der Verriegelungshebel (109) im wesentlichen gleichzeitig mit der Beendigung der Einführung der Plattenkassette (2) in den Halter (26) verdreht wird, damit Verriegelungsansätze (113a) auf dem Verriegelungshebel (109) in die Plattenkassette in der Nähe der Positionslöcher (11a, 11b) der Plattenkassette eingreifen, um die Plattenkassette (2) in bezug auf den Halter (26) zu verriegeln,
dadurch gekennzeichnet, daß
der Verriegelungshebel (109) eine Schiene (110) aufweist, die sich über die volle Breite der Plattenkassette (2) erstreckt und Seitenarme (114) aufweist, die drehbar in Zapfen (118) angelenkt sind, die sich parallel zur seitlichen Ausdehnung der Plattenkassette (2) erstrecken; und
die Verriegelungseinrichtung ein Verschiebeteil (72) aufweist, das verschiebbar auf dem Halter (26) befestigt ist, so daß es bei der Einführung der Plattenkassette in den Halter (26) verschiebbar ist, wobei der Verriegelungshebel (109) durch das Verschiebeteil (72) gedreht wird und Eingriffsteile (113a, 113a) aufweist, die in die Enden der Positionslöcher (11a, 11b) eingreifen, die in der Oberfläche der Kassette (2) gebildet sind, die der Positionierungseinrichtung (30) nicht gegenüber liegt.

2. Aufzeichnung/Wiedergabevorrichtung nach Anspruch 1, wobei der Verriegelungshebel (109) durch eine Antriebseinrichtung (88) in eine Richtung gedrückt wird, in der die Eingriffsteile (113a, 113a) in die Positionslöcher (11a, 11b) auf der Seite der Plattenkassette eingreifen, die der Positionierungseinrichtung (30) nicht gegenüberliegt.

3. Aufzeichnungs/Wiedergabevorrichtung nach Anspruch 2, wobei der Verriegelungshebel (109) drehbar am Halter befestigt ist und der Halter eine Ausnehmung (117) aufweist, durch die die Eingriffsteile (113a, 113a) in die Positionslöcher (11a, 11b) auf der Seite der Plattenkassette eingreifen, die der Positionierungseinrichtung (30) nicht gegenüberliegt.

4. Aufzeichnungs/Wiedergabevorrichtung nach Anspruch 1, die weiter eine Entriegelungseinrichtung (103) aufweist, die durch die Verschiebeeinrichtung angetrieben wird, um die Verriegelung durch die Verriegelungseinrichtung (109) zu lösen, wenn der Halter (26) durch die Verschiebeeinrichtung von der ersten Position in die zweite Position verschoben wird.

## Revendications

1. Appareil d'enregistrement-reproduction pour une cassette à disque comportant
une cassette à disque (2) recevant de façon rotative un support d'enregistrement en forme de disque (19) et ayant des trous de positionnement (lla, llb) formés des deux côtés de la cassette à disque (21) et alignés avec l'épaisseur de la cassette à disque,
un support (26) destiné à maintenir la cassette à disque (2) et verticalement mobile de façon à amener la cassette à disque (2) à prendre de manière sélective une première position dans laquelle le support d'enregistrement en forme de disque (19) est fixé sur des moyens d'entraînement en rotation de disque (34) ou une deuxième espacée au-dessus de la première position,
des moyens destinés à déplacer le support (26) entre la première position et la deuxième position,
des moyens de positionnement (30) destinés à engager les trous de positionnement (11a, 11b) dans la cassette à disque (2) lorsque le support (26) est dans la première position afin de positionner ainsi la cassette à disque (2), et
des moyens de blocage (109, 113a) sur un levier de blocage (109) prévu pour rotation dans le sens de l'épaisseur de la cassette à disque (2), le levier de blocage (109) étant entraîné en rotation sensiblement simultanément à la fin de l'insertion de la cassette à disque (2) dans le support (26) afin d'amener des saillies de blocage (113a) sur le levier de blocage (109) à engager la cassette à disque dans le voisinage des trous de positionnement (11a, 11b) de la cassette à disque de façon à bloquer la cassette à disque (2) par rapport au support (26),
caractérisé en ce que
le levier de blocage (109) comporte une bande (110) qui s'étend sur toute la largeur de la cassette à disque (2) et a des bras latéraux (114) qui pivotent sur des pivots (118) qui s'étendent parallèlement à l'extension latérale de la cassette à disque (2); et
les moyens de blocage comprennent un élément coulissant (72) monté de façon coulissante sur le support (26) afin de coulisser lors de l'insertion de la cassette à disque dans le support (26), le levier de blocage (109) étant tourné par l'élément coulissant (72) et ayant des parties d'engagement (113a, 113a) qui s'engagent dans les extrémités des trous de positionnement (11a, 11b) qui sont formés dans la surface de la cassette (2) qui ne fait pas face aux moyens de positionnement (30).

2. Appareil d'enregistrement-reproduction selon la revendication 1, dans lequel le levier de blocage (109) est poussé par des moyens de poussée (88) dans une direction dans laquelle les parties d'engagement (113a, 113a) sont engagées avec les trous de positionnement (11a, 11b) sur le côté de la cassette à disque qui ne fait pas face aux moyens de positionnement (30).

3. Appareil d'enregistrement-reproduction selon la revendication 2, dans lequel le levier de blocage (109) est monté de façon rotative sur le support et le support possède un renfoncement (117) grâce auquel les parties d'engagement (113a, 113a) sont engagées avec les trous de positionnement (11a, 11b) sur le côté de la cassette à disque qui ne fait pas face aux moyens de positionnement (30).

4. Appareil d'enregistrement-reproduction selon la revendication 1, comportant en outre des moyens de déblocage (103) entraînés par les moyens de déplacement afin de libérer le blocage par les moyens de blocage (109) lorsque le support (26) est déplacé par les moyens de déplacement de la première position vers la deuxième position.
